# EUROPÄISCHE PATENTSCHRIFT

(11) **EP 1 426 637 B1**
(45) Veröffentlichungstag und Bekanntmachung des Hinweises auf die Patenterteilung: **10.05.2006**
(21) Anmeldenummer: 03004135.4
(22) Anmeldetag: 26.02.2003
(51) Int. Cl.: F16B 37/14, F16B 43/00

(54) **Radmutter**
Wheel nut
Ecrou de roue

(30) Priorität: 04.12.2002 DE 10256653
(43) Veröffentlichungstag der Anmeldung: 09.06.2004
(73) Patentinhaber: Metallwarenfabrik Hermann Winker GmbH & Co. KG, 78549 Spaichingen (DE)
(72) Erfinder: Winker, Alexander, Dr., 78549 Spaichingen (DE)
(74) Vertreter: Winter, Martina

(56) Entgegenhaltungen:
- WO-A-02/31367
- DE-A- 10 123 854
- US-A- 6 036 420

## Beschreibung

Die Erfindung betrifft eine Radmutter mit einem Mutterkörper mit einem verbreiterten radialen Bund und einer Druckscheibe, die mittels eines Arretierungsmittels auf dem Mutterkörper drehbar und unverlierbar gehalten ist, sowie mit einer auf dem Mutterkörper angeordneten Kappe.

Derartige Radmuttern mit einer dekorativen Kappe sind auf dem Gebiet der Kraftfahrzeugtechnik bekannt. Sie dienen insbesondere zur Befestigung von Radfelgen, vor allem von hochwertigen Aluminium-Felgen, aber auch Stahlfelgen, auf einer Radnabe. Die Kappen werden aus hochglanzpoliertem, rostfreiem Stahl hergestellt und auf den, in den meisten Fällen sechskantig ausgebildeten Angriffsteil einer Mutter, aufgesetzt.

Es ist üblich, eine solche Kappe mit dem Mutterkörper einer Radmutter mittels einer elektrischen Ringschweißung fest zu verbinden. Auch das Befestigen der Kappe auf dem Mutterkörper durch Verkleben ist üblich.

Beim Verschweißen der Kappe mit dem Mutterkörper der Radmutter wird zum einen eine aufwändige Schweißvorrichtung benötigt. Zum anderen können Beeinträchtigungen der sichtbaren Oberfläche der Kappe auftreten. Die hochglanzpolierte Fläche der Kappe kann durch das Anlegen einer Elektrode eingetrübt werden. Auch die Auflagefläche des Mutterkörpers, die mit der Fläche einer Druckscheibe in Eingriff steht, kann beeinträchtigt werden. Diese Beeinträchtigungen entstehen durch das Anlegen der für den Schweißvorgang erforderlichen Elektroden an diesen Stellen. Darüber hinaus ist eine einwandfreie Verschweißung zwischen Kappe und Mutterkörper nur möglich, wenn die Oberflächen der einzelnen Bauteile elektrisch leitend sind. Das bedeutet, dass zum Zwecke des Verschweißens die Oberfläche der Bauteile zum Beispiel verzinkt sein muss.

Inzwischen werden jedoch auch andere Oberflächenbeschichtungen, wie das Auftragen einer Lackschicht in Form einer Zink-Lamellen-Beschichtung angewendet, die jedoch zum Teil nicht elektrisch leitend sind, und somit eine Schweißverbindung ausschließen.

Aus der deutschen Offenlegungsschrift DE 101 23 854 A1 ist eine Radbefestigungsanordnung bekannt, bei der ein Druckring mittels eines Bördelrandes unter Zwischenlage einer Druckscheibe auf dem Flansch eines Mutterkörpers drehbar und unverlierbar gehalten ist. Eine dekorative Kappe ist jedoch auf den sechskantigen Abschnitt des Mutterkörpers lediglich aufgesteckt, ohne in besonderer Weise befestigt zu sein. Eine derartige Haftverbindung zwischen der Kappe und dem Mutterkörper kann leicht zum Verlieren der Kappe führen.

Aus der internationalen Patentanmeldung WO 2002/031 367 A2 ist eine Radmutter mit einem Mutterkörper, einer drehbar am Mutterkörper anliegenden Scheibe sowie einer Zierkappe bekannt. Die Zierkappe hält mir ihrem freien Rand den Mutterkörper und die Scheibe zusammen. Diese Radmutter ist aufgrund ihrer Ausgestaltung für die Befestigung von Rädern mit Stahlfelgen auf Radachsen geeignet, nicht aber beispielsweise für Alu-Felgen.

Der Erfindung liegt die Aufgabe zugrunde, eine Radmutter der oben genannten Art zu schaffen, die einen unkomplizierten Aufbau hat und deren einzelne Bauteile einfach zusammengebaut und zusammengehalten werden können.

Die Lösung besteht in einer Radmutter mit den Merkmalen des Patentanspruchs 1. Die erfindungsgemäße Radmutter zeichnet sich dadurch aus, dass das Arretierungsmittel (16) als ein an der Druckscheibe (13) umlaufender Rand (17) ausgebildet ist, der sowohl den Bund (12) als auch einen am freien Ende der Kappe (14) ausgebildeten Flansch (18) übergreift, derart, dass die Kappe (14) und die Druckscheibe (13) gemeinsam auf dem Mutterkörper (11) gehalten sind.

Die erfindungsgemäße Ausbildung der Radmutter bewirkt, dass die drei Bauteile, Mutterkörper, Druckscheibe und Kappe mittels eines einzigen Arretierungsmittels und in einem einzigen Arbeitsgang zuverlässig und funktionsgerecht in ihrer zusammengebauten Lage gehalten sind.

Darüber hinaus ist keine aufwändige und unwirtschaftliche Verschweißung oder Verklebung der Kappe auf dem Mutterkörper mehr erforderlich.

Vor allem können auch Oberflächenbehandlungen der einzelnen Bauteile vorgenommen werden, die für das Verschweißen von Kappe und Mutterkörper wegen ihrer elektrischen Nichtleitfähigkeit nicht mehr geeignet sind.

Vorteilhafte Weiterbildungen ergeben sich aus den Unteransprüchen.

Der Zusammenbau der drei Bauteile, Mutterkörper, Druckscheibe und Kappe erfolgt in einfacher Weise dadurch, dass ein freier Bereich am Rand der Druckscheibe vorgesehen ist, der nach dem Zusammenbau des Mutterkörpers, der Druckscheibe und der Kappe radial nach innen ausrichtbar ist. Dabei ist der freie Bereich des Randes mittels eines Bördelverfahrens radial nach innen ausrichtbar.

Ein derartiger Zusammenbau hat den Vorteil, dass sämtliche drei Bauteile, wie Mutterkörper, Druckscheibe und Kappe, durch einfaches Umbördeln des freien Bereiches des Randes des Arretierungsmittels in ihrer einander zugeordneten Lage positioniert werden können. Dabei erweist es sich als vorteilhaft, dass der Flansch der Kappe auf dem Bund des Mutterkörpers aufliegt.

In einer weiteren Ausführungsform weist der Mutterkörper oberhalb des Bundes eine stufenförmige umlaufende Schulter auf, wobei die Kappe oberhalb des Flansches mit einer an die Form der Schulter angepassten Stufe versehen ist.

Diese Ausbildung des Erfindungsgegenstandes trägt maßgeblich dazu bei, dass infolge der mäanderähnlichen Ausbildung keine oder nahezu keine Feuchtigkeit zwischen die Kappe und den Mutterkörper eindringen kann. Die Lebensdauer der Radmutter wird mangels Korrosion auf diese Weise erheblich verlängert.

Dieser Vorteil der Dichtigkeit gegenüber Feuchtigkeit wird in erheblichem Maße dadurch verstärkt, dass der freie Bereich des Randes der Druckscheibe bei zusammengebauter Mutter an der an der Kappe ausgebildeten Stufe dicht und bündig angrenzt.

Auch die Maßnahme, dass die Kappe mittels eines Presssitzes auf dem Mutterkörper sitzt, trägt dazu bei, dass keine oder wenig Feuchtigkeit zwischen Kappe und Mutterkörper eindringen kann.

In einer weiteren Ausgestaltung der Erfindung ist mindestens eine der aufeinander liegenden Flächen des Mutterkörpers und der Druckscheibe mit einer umlaufenden zentralen Ausnehmung versehen, derart, dass der Mutterkörper und die Druckscheibe nur in ihrem äußeren radialen Bereich aufeinanderliegen.

Diese Ausbildung hat zum einen den Vorteil, dass bei etwaigen Winkeltoleranzen zwischen den Auflageflächen des Mutterkörpers und der Druckscheibe nicht nur eine Linienauflage, sondern weitgehend eine flächige Auflage zwischen diesen Bauteilen stattfindet. Außerdem hat diese Ausgestaltung eine gleichmäßigere Vorspannkraft der Mutter-Schraubenverbindung zur Folge. Zum anderen kann die Ausnehmung zur Aufnahme eines geeigneten Schmiermittels genutzt werden.

In einer Weiterbildung der Erfindung kann zwischen dem Arretierungsmittel und dem Bund und der Kappe ein Dichtungsmittel vorgesehen sein. Zweckmäßiger Weise kann das Dichtungsmittel zwischen dem freien Bereich des Randes der Druckscheibe und dem Bund bzw. dem Flansch der Kappe vorgesehen sein. Diese Ausbildung hat den Vorteil, dass auch zwischen dem Mutterkörper und der Druckscheibe das Eindringen von Feuchtigkeit verhindert oder zumindest vermindert wird.

Im einzelnen kann die Weiterbildung so getroffen sein, dass das Dichtungsmittel ein Dichtungsring bzw. eine Dichtungsscheibe ist, die zwischen dem auf dem Bund des Mutterkörpers aufliegenden Flansch der Kappe und dem radial nach innen ausgerichteten freien Bereich des Randes der Druckscheibe angeordnet ist.

Eine derartige Ausführungsform ist einfach, prozesssicher und preiswert herzustellen und hat auf die Lebensdauer und die Funktionszuverlässigkeit der Schrauben-Mutterverbindung eine positive Auswirkung.

Ein Ausführungsbeispiel der vorliegenden Erfindung wird im folgenden anhand der beigefügten Zeichnungen näher erläutert. Es zeigen
- Fig. 1: die erfindungsgemäße Radmutter in einer schematischen, nicht maßstabsgetreuen Darstellung im Schnitt,
- Fig. 2: ein weiteres Ausführungsbeispiel gemäß Fig. 1 in einer schematischen, nicht maßstabsgetreuen Darstellung im Schnitt,
- Fig. 3: die Radmutter gemäß Fig. 1 in einer schematischen, nicht maßstabsgetreuen Darstellung im Draufsicht.

Wie in der Zeichnung darstellt, besteht die erfindungsgemäße Radmutter 10, die zur Befestigung einer Radfelge auf einer Radnabe dient, aus einem Mutterkörper 11 mit einem umlaufenden radial verbreiterten Bund 12. Der Mutterkörper 11 ist mit einer axialen Gewindebohrung 24 zur Aufnahme eines Gewindebolzens versehen.

Aus Gründen eines dekorativen Aussehens ist der Mutterkörper 11 von einer Kappe 14 umhüllt, die aus poliertem, rostfreiem Stahl besteht. Dabei endet das freie, offene Ende der Kappe 14 in einem Flansch 18, der auf dem radial verbreiterten Bund 12 des Mutterkörpers 11 aufliegt. Oberhalb des Bundes 12 ist der Mutterkörper 11 mit einer umlaufenden Schulter 19 versehen und die Kappe 14 weist eine an die Form der Schulter 19 angepasste Stufe 20 auf. Diese mäanderähnliche Ausbildung verhindert weitgehend das Eindringen von Feuchtigkeit zwischen dem Mutterkörper 11 und der Kappe 14. Um diesen Effekt zu optimieren, sitzt die Kappe 14 mittels eines Presssitzes auf dem Mutterkörper 11.

An einer Fläche 27 des Mutterkörpers 11 liegt eine Druckscheibe 13 mit ihrer Fläche 28 drehbar an. Die Druckscheibe 13 ist mit einer Durchgangsbohrung 25 und mit einem Arretierungsmittel 16 versehen, das beim Ausführungsbeispiel aus einem sich axial erstreckenden Rand 17 besteht, der in einem freien Bereich 23 endet.

Dieser Rand 17 mit seinem freien Bereich 23 umgreift den Bund 12 des Mutterkörpers 11 und zugleich den auf dem Bund 12 aufliegenden Flansch 18 der Kappe 14. Auf diese Weise sind sowohl die Druckscheibe 13 unverlierbar und drehbar am Mutterkörper 11 als auch die Kappe 14 am Mutterkörper 11 gehalten.

Durch diese erfinderische Ausgestaltung können die drei Bauteile, Mutterkörper 11, Druckscheibe 13 und Kappe 14 in einem einzigen Arbeitsgang miteinander verbunden werden, in dem der freie Bereich 23 des Randes 17 radial nach innen umgebördelt wird.

Selbstverständlich kann zusätzlich zu der erfindungsgemäßen Ausbildung der Radmutter 10, die Kappe 14 mittels einer Klebung oder einer Schweißung am Mutterkörper 11 gesichert werden. Hinsichtlich einer zuverlässigen Funktion der Radmutter ist dies jedoch gemäß der Erfindung nicht erforderlich.

Schließlich ist in der Fläche 27 des Mutterkörpers 11, die auf der Fläche 28 der Druckscheibe 13 aufliegt, eine zentrale sich radial erstreckende Ausnehmung 21 vorgesehen. Die Ausnehmung ist auch in der Druckscheibe möglich. Diese Ausnehmung 21 verhindert, dass bei Winkeltoleranzen zwischen den Flächen 27 und 28 sich nur eine linienförmige Auflage zwischen den Flächen ergibt. Die Verlegung der Auflage der Flächen 27 und 28 radial nach außen reduziert die Streuung der Vorspannkraft zwischen der Radmutter 10 und einem eingedrehten Schraubenbolzen. Zusätzlich kann die Ausnehmung 21 zur Aufnahme eines Schmiermittels genutzt werden.

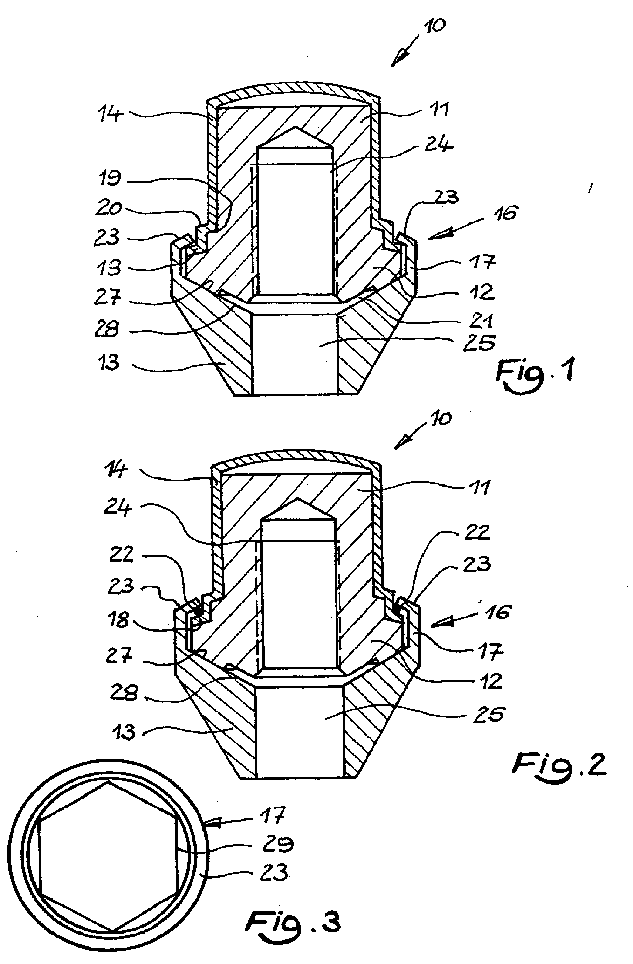

In der Fig. 2 ist eine Weiterbildung der Radmutter 10 gezeigt. Dabei bezeichnen gleiche Bezugsziffern gleich Bauteile wie bei dem anhand der Fig. 1 beschriebenen Ausführungsbeispiel.

Der Unterschied zu dem in Fig. 1 dargestellten Ausführungsbeispiel besteht in der Anordnung eines Dichtungsrings 22 zwischen dem Flansch 18 der Kappe 14 und dem freien Bereich 23 des Randes 17 des Arretierungsmittels 16.

Diese Ausführungsform verhindert weitgehend ein Eindringen von Feuchtigkeit zwischen dem Mutterkörper 11 und der Druckscheibe 13, so dass eine Korrosionsbildung an diesen Bauteilen nahezu ausgeschlossen ist.

Die erfindungsgemäße Radmutter stellt somit ein einfach und kostengünstig herzustellendes, und ein prozesssicheres Bauteil dar, das eine zuverlässige und langlebige Funktion gewährleistet.

## Patentansprüche

1. Radmutter mit einem Mutterkörper mit einem verbreiterten radialen Bund (15) und einer Druckscheibe (13), die mittels eines Arretierungsmittels (16) auf dem Mutterkörper drehbar und unverlierbar gehalten ist sowie mit einer auf dem Mutterkörper angeordneten Kappe (14), **dadurch gekennzeichnet, dass** das Arretierungsmittel (16) als ein an der Druckscheibe (13) umlaufender Rand (17) ausgebildet ist, der sowohl den Bund (12) als auch einen am freien Ende der Kappe (14) ausgebildeten Flansch (18) übergreift, derart, dass die Kappe (14) und die Druckscheibe (13) gemeinsam auf dem Mutterkörper (11) gehalten sind.

2. Radmutter nach Anspruch 1, **dadurch gekennzeichnet, dass** ein freier Bereich (23) am Rand (17) vorgesehen ist, der nach dem Zusammenbau der drei Bauteile des Mutterkörpers (11), der Druckscheibe (13) und der Kappe (14) radial nach innen ausrichtbar ist.

3. Radmutter nach Anspruch 2, **dadurch gekennzeichnet, dass** der freie Bereich (23) des Randes (17) mittels eines Bördelverfahrens radial nach innen ausrichtbar ist.

4. Radmutter nach einem der Ansprüche 1 bis 3, **dadurch gekennzeichnet, dass** der Flansch (18) der Kappe (14) auf dem Bund (12) des Mutterkörpers (11) aufliegt.

5. Radmutter nach einem der Ansprüchen 1 bis 4, **dadurch gekennzeichnet, dass** der Mutterkörper (11) benachbart zum Bund (12) eine stufenförmige umlaufende Schulter (19) aufweist, und dass die Kappe (14) benachbart zum Flansch (18) mit einer an die Form der Schulter (19) angepassten Stufe (20) versehen ist.

6. Radmutter nach Anspruch 5, **dadurch gekennzeichnet, dass** der freie Bereich (23) des Randes (17) der Druckscheibe (13) bei zusammengebauter Mutter (10) an der an der Kappe (14) ausgebildeten Stufe (20) dicht und bündig angrenzt.

7. Radmutter nach einem der vorhergehenden Ansprüche, **dadurch gekennzeichnet, dass** die Kappe (14) mittels eines Presssitzes auf dem Mutterkörper (11) sitzt.

8. Radmutter nach einem der vorhergehenden Ansprüche, **dadurch gekennzeichnet, dass** mindestens eine der aufeinanderliegenden Flächen (27, 28) des Mutterkörpers (11) und der Druckscheibe (13) mit einer umlaufenden zentralen Ausnehmung (21) versehen ist, derart, dass der Mutterkörper (11) und die Druckscheibe (13) nur in ihrem äußeren radialen Bereich aufeinander liegen.

9. Radmutter nach Anspruch 1, **dadurch gekennzeichnet, dass** zwischen dem Arretierungsmittel (16) und dem Bund (12) und der Kappe (14) ein Dichtungsmittel vorgesehen ist.

10. Radmutter nach den Ansprüchen 1 und 9, **dadurch gekennzeichnet, dass** das Dichtungsmittel zwischen dem freien Bereich (23) des Randes (17) der Druckscheibe (13) und dem Bund (12) bzw. dem Flansch (18) der Kappe (14) vorgesehen ist.

11. Radmutter nach den Ansprüchen 1 und 10, **dadurch gekennzeichnet, dass** das Dichtungsmittel ein Dichtungsring (22) bzw. eine Dichtungsscheibe ist, die zwischen dem auf dem Bund (12) des Mutterkörpers (11) aufliegenden Flansch (18) der Kappe (14) und dem radial nach innen ausgerichteten freien Bereich (23) des Randes (17) der Druckscheibe (13) angeordnet ist.

## Claims

1. Wheel nut having a nut body with a widened radial collar (15) and a thrust washer (13) which is held on the nut body in a rotatable and captive manner by a locking means (16), and having a cap (14) arranged on the nut body, **characterized in that** the locking means (16) is designed as a border (17) which runs around the thrust washer (13) and overlaps both the collar (12) and a flange (18), formed on the free end of the cap (14), in such a way that the cap (14) and the thrust washer (13) are held together on the nut body (11).

2. Wheel nut according to Claim 1, **characterized in that** a free region (23) is provided on the border (17), which free region (23) can be oriented radially inwards after the assembly of the three components - the nut body (11), the thrust washer (13) and the cap (14).

3. Wheel nut according to Claim 2, **characterized in that** the free region (23) of the border (17) can be oriented radially inwards by means of a flanging process.

4. Wheel nut according to one of Claims 1 to 3, **characterized in that** the flange (18) of the cap (14) rests on the collar (12) of the nut body (11).

5. Wheel nut according to one of Claims 1 to 4, **characterized in that** the nut body (11) has a stepped encircling shoulder (19) adjacent to the collar (12), and **in that** the cap (14) is provided with a step (20) adjacent to the flange (18), this step (20) being adapted to the shape of the shoulder (19).

6. Wheel nut according to Claim 5, **characterized in that** the free region (23) of the border (17) of the thrust washer (13), when nut (10) is assembled, adjoins the step (20), formed on the cap (14), in a tight and flush manner.

7. Wheel nut according to one of the preceding claims, **characterized in that** the cap (14) sits on the nut body (11) by means of an interference fit.

8. Wheel nut according to one of the preceding claims, **characterized in that** at least one of the surfaces (27, 28) of the nut body (11) and the thrust washer (13) which rest on one another is provided with an encircling central recess (21) in such a way that the nut body (11) and the thrust washer (13) rest on one another only in their outer radial region.

9. Wheel nut according to Claim 1, **characterized in that** a sealing means is provided between the locking means (16) and the collar (12) and the cap (14).

10. Wheel nut according to Claims 1 and 9, **characterized in that** the sealing means is provided between the free region (23) of the border (17) of the thrust washer (13) and the collar (12) or the flange (18) of the cap (14).

11. Wheel nut according to Claims 1 and 10, **characterized in that** the sealing means is a sealing ring (22) or a sealing disc which is arranged between the flange (18), resting on the collar (12) of the nut body (11), of the cap (14) and the radially inwardly oriented free region (23) of the border (17) of the thrust washer (13).

## Revendications

1. Ecrou de roue avec un corps d'écrou ayant un collet radial élargi (15) et un disque de pression (13) qui est maintenu par le biais d'un moyen de blocage (16) de manière imperdable et de manière à pouvoir tourner sur le corps d'écrou, ainsi qu'avec un capuchon (14) disposé sur le corps d'écrou, **caractérisé en ce que** le moyen de blocage (16) est réalisé sous la forme d'un bord périphérique (17) sur le disque de pression, qui vient en prise à la fois sur le collet (12) et sur une bride (18) réalisée à l'extrémité libre du capuchon (14), de telle sorte que le capuchon (14) et le disque de pression (13) soient maintenus ensemble sur le corps d'écrou (11).

2. Ecrou de roue selon la revendication 1, **caractérisé en ce qu'**une zone libre (23) est prévue sur le bord (17), laquelle peut être orientée radialement vers l'intérieur après l'assemblage des trois composants du corps d'écrou (11), du disque de pression (13) et du capuchon (14).

3. Ecrou de roue selon la revendication 2, **caractérisé en ce que** la zone libre (23) du bord (17) peut être orientée radialement vers l'intérieur au moyen d'un procédé de roulage.

4. Ecrou de roue selon l'une quelconque des revendications 1 à 3, **caractérisé en ce que** la bride (18) du capuchon (14) s'applique sur le collet (12) du corps d'écrou (11).

5. Ecrou de roue selon l'une quelconque des revendications 1 à 4, **caractérisé en ce que** le corps d'écrou (11) présente, en position adjacente au collet (12), un épaulement périphérique (19) de forme étagée, et **en ce que** le capuchon (14) est pourvu, à proximité de la bride (18), d'un gradin (20) adapté à la forme de l'épaulement (19).

6. Ecrou de roue selon la revendication 5, **caractérisé en ce que** la zone libre (23) du bord (17) du disque de pression (13) est hermétiquement et étroitement adjacente au gradin (20) réalisé sur le capuchon (14), lorsque l'écrou (10) est assemblé.

7. Ecrou de roue selon l'une quelconque des revendications précédentes, **caractérisé en ce que** le capuchon (14) repose au moyen d'un ajustement serré sur le corps d'écrou (11).

8. Ecrou de roue selon l'une quelconque des revendications précédentes, **caractérisé en ce qu'**au moins l'une des faces (27, 28) reposant l'une sur l'autre du corps d'écrou (11) et du disque de pression (13) est pourvue d'un évidement central périphérique (21), de telle sorte que le corps d'écrou (11) et le disque de pression (13) ne s'appliquent l'un sur l'autre que dans leur région radiale extérieure.

9. Ecrou de roue selon la revendication 1, **caractérisé en ce que** l'on prévoit, entre le moyen de blocage (16) et le collet (12) et le capuchon (14), un moyen d'étanchéité.

10. Ecrou de roue selon les revendications 1 et 9, **caractérisé en ce que** le moyen d'étanchéité est prévu entre la zone libre (23) du bord (17) du disque de pression (13) et le collet (12) ou la bride (18) du capuchon (14).

11. Ecrou de roue selon les revendications 1 et 10, **caractérisé en ce que** le moyen d'étanchéité est une bague d'étanchéité (22) ou une rondelle d'étanchéité, qui est disposée entre la bride (18) du capuchon (14) reposant sur le collet (12) du corps d'écrou (11) et la zone libre (23) orientée radialement vers l'intérieur du bord (17) du disque de pression (13).
